# FASCICULE DE BREVET EUROPEEN

(11) **EP 2 439 079 B1**
(45) Date de publication et mention de la délivrance du brevet: **03.08.2016**
(21) Numéro de dépôt: 11183102.0
(22) Date de dépôt: 28.09.2011
(51) Int. Cl.: G06K 19/077, G06K 19/073, B42D 25/305, B42D 25/24, G06K 19/02

(54) **Document de sécurité, tel qu'un passeport, comprenant un dispositif de communication en champ proche**
Sicherheitsdokument, wie etwa einen Reisepass, das eine Kommunikationsvorrichtung im nahen Umfeld umfasst
Security document, such as a passport, including a near-field communication device

(30) Priorité: 05.10.2010 FR 1058054
(43) Date de publication de la demande: 11.04.2012
(73) Titulaire: Oberthur Technologies, 92300 Levallois-Perret (FR)
(72) Inventeur: Launay, François, 35500 Vitre (FR)
(74) Mandataire: Delumeau, François Guy

(56) Documents cités:
- WO-A1-2006/000849
- FR-A1- 2 868 987
- FR-A1- 2 881 251
- US-A1- 2009 315 320

## Description

La présente invention concerne le domaine technique des documents de sécurité ou documents valeurs comportant des données, notamment personnelles et/ou de sécurité, tels que par exemple les passeports, les cartes bancaires, les cartes d'identité.

L'invention s'applique plus particulièrement, mais non exclusivement à l'anti-falsification de documents dits électroniques, car comportant un dispositif de communication en champ proche ou dispositif de radio identification de type RFID (de l'anglais « Radio Frequency Identity »). Ce dispositif RFID comprend généralement une antenne de communication en champ proche et un microcircuit relié à l'antenne.

Un tel dispositif vient compléter l'authentification du document assurée en outre par des éléments de sécurité classiques optiques, visuels et/ou tactiles intégrés au document tels que par exemple des filigranes, des hologrammes, des fils de sécurité, des impressions de données personnelles, etc. La présence du microcircuit permet par exemple le stockage d'informations concernant le porteur du document.

On connaît déjà dans l'état de la technique, un passeport comprenant un dispositif de communication en champ proche. Par exemple, le dispositif de communication se présente sous forme d'un insert, plus connu sous le terme anglo-saxon « inlay ».

Généralement, un passeport comprend un livret formé par une pluralité de feuilles assemblées entre elles le long d'une ligne de reliure, parmi lesquelles au moins une feuille porte des données personnelles du porteur, c'est-à-dire relatives à son identité, dite données de personnalisation, telles que sa photographie, son nom, son adresse personnelle et des données de sécurisation telles que des filigranes, des fils de sécurité ou encore un graphisme particulier, etc.

Un « inlay » ou insert à transpondeur comprend généralement un substrat réalisé en matière plastique dans l'épaisseur duquel est incorporé un ensemble transpondeur formé par une antenne et un microcircuit raccordé à l'antenne.

Ce substrat est généralement destiné à être incorporé entre deux couches du document. Dans le cas du passeport, « l'inlay » est par exemple intercalé entre la couverture et la page de garde, l'ensemble étant par la suite assemblé par exemple par collage à froid ou laminage à chaud pour former une unique page du passeport.

L'antenne est formée par exemple par un enroulement de spires électriquement conductrices formées par impression d'une encre conductrice sur une face de l'insert et l'antenne est connectée électriquement au microcircuit au moyen de pastilles conductrices.

Cette solution présente toutefois l'inconvénient de fournir un document avec une couverture très épaissie, « l'inlay » ayant généralement une épaisseur relativement importante pour incorporer entièrement dans son corps le module.

En outre, la connexion de l'antenne et du microcircuit au moyen de pastilles conductrices est particulièrement sensible à la flexion et à la torsion.

Or, il est nécessaire notamment pour les documents officiels tels que les passeports, que la durée de vie de tels documents soit suffisamment longue pour couvrir la durée de validité du titre défini par le passeport.

Il est encore connu, notamment du document WO 02/089052, d'incorporer le dispositif de communication dans la couverture du passeport sous la forme d'un composant unique formé par un microcircuit intégrant l'antenne.

Dans ce document, la couverture est formée par au moins deux couches assemblées entre elles dans l'épaisseur desquelles le composant est intégré.

Toutefois, un tel composant est particulièrement onéreux. En outre, un falsificateur peut aisément délaminer les couches et extraire le composant dans le but d'un usage ultérieur frauduleux.

Le document US 2009/0315320 divulgue un inlay pour document de sécurité avec une antenne collée au substrat de l'inlay.

Le but de la présente invention est de proposer un document de sécurité comprenant un dispositif de communication en champ proche, ne présentant pas de surépaisseur au niveau de la localisation du dispositif et permettant une protection accrue contre les tentatives de falsification.

A cet effet, l'invention a pour objet un document de sécurité, comprenant une structure multicouche formée par au moins deux couches assemblées entre elles face contre face et un dispositif de communication en champ proche incorporé dans l'épaisseur de la structure, caractérisé en ce que le dispositif se présente sous forme d'un module comprenant un support portant une antenne et un microcircuit et en ce que le module comprend une zone de fragilisation apte à se rompre lors d'une séparation entre elles d'au moins les deux couches pour provoquer la destruction du module.

D'une part, le dispositif se présente sous forme d'un module ce qui permet d'assurer une protection mécanique de la connexion entre le microcircuit et l'antenne contre les efforts de torsion et/ou de flexion susceptibles d'être subis par le document, notamment grâce à la présence du support. En effet, le support permet de consolider la connexion du microcircuit et de l'antenne en réduisant l'impact des efforts de flexion ou de torsion appliqués au document sur la connexion des deux composants, ce qui permet de limiter les risques de désolidarisation intempestive des deux composants.

D'autre part, grâce à l'invention, le document est mieux protégé des tentatives de falsification. En effet, lors d'une tentative d'extraction du dispositif hors du document, la zone de fragilisation, apte à se rompre lors d'une séparation entre elles d'au moins les deux couches, provoque une destruction du module ce qui empêche toute utilisation future frauduleuse.

Un document selon l'invention comprend en outre l'une ou plusieurs des caractéristiques selon lesquelles :
- la zone de fragilisation s'étend entre des première et deuxième parties du module ;
- la première partie du module comprend une antenne de communication en champ proche et la deuxième partie comprend le microcircuit ;
- la première partie est solidaire de la première couche et la deuxième partie est solidaire de la deuxième couche ;
- le document comprend une pluralité de feuilles reliées entre elles pour former un livret, la structure est formée par au moins une feuille de couverture et une feuille de garde du livret ;
- la structure comprend en outre une feuille additionnelle intercalée entre la feuille de couverture et la feuille de garde, à l'intérieur de laquelle est agencé au moins partiellement le module ;
- le module est logé dans une cavité ménagée dans l'épaisseur d'au moins deux couches de la structure ;
- la cavité comprend une région centrale profonde de réception du microcircuit et une région périphérique surélevée entourant la région centrale d'appui du support du module et délimitant entre elles un gradin, la région périphérique s'étend entièrement dans l'une des deux couches ;
- la cavité s'étend dans l'épaisseur d'au moins la feuille de couverture et la feuille additionnelle ;
- le microcircuit est fixé au fond de la cavité et le support de module est solidaire de la feuille additionnelle et/ou de la feuille de garde, pour provoquer une désolidarisation du support et du microcircuit ;
- la feuille additionnelle a une épaisseur supérieure ou égale à l'épaisseur du support ;
- la feuille additionnelle est réalisée dans un matériau plus facilement usinable que le matériau formant la feuille de couverture ;
- la feuille additionnelle est réalisée dans un matériau à base de fibres synthétiques et/ou naturelles ;
- le module est optiquement dissimulé dans la structure multicouche.

D'autres caractéristiques et avantages de l'invention apparaîtront à la lumière de la description qui suit, faite en référence aux dessins annexés dans lesquels :
- la figure 1 représente un document de sécurité tel qu'un passeport selon un premier mode de réalisation ;
- la figure 2 représente une vue en coupe de la couverture du passeport de la figure 1 ;
- la figure 3 représente une vue en coupe d'une structure multicouche formant la couverture du passeport de la figure 1 ;
- la figure 4 représente la structure de la figure 3 selon un deuxième mode de réalisation de l'invention ;
- les figures 5 à 7 représentent les étapes de fabrication d'un document de sécurité selon le deuxième mode de réalisation de l'invention.

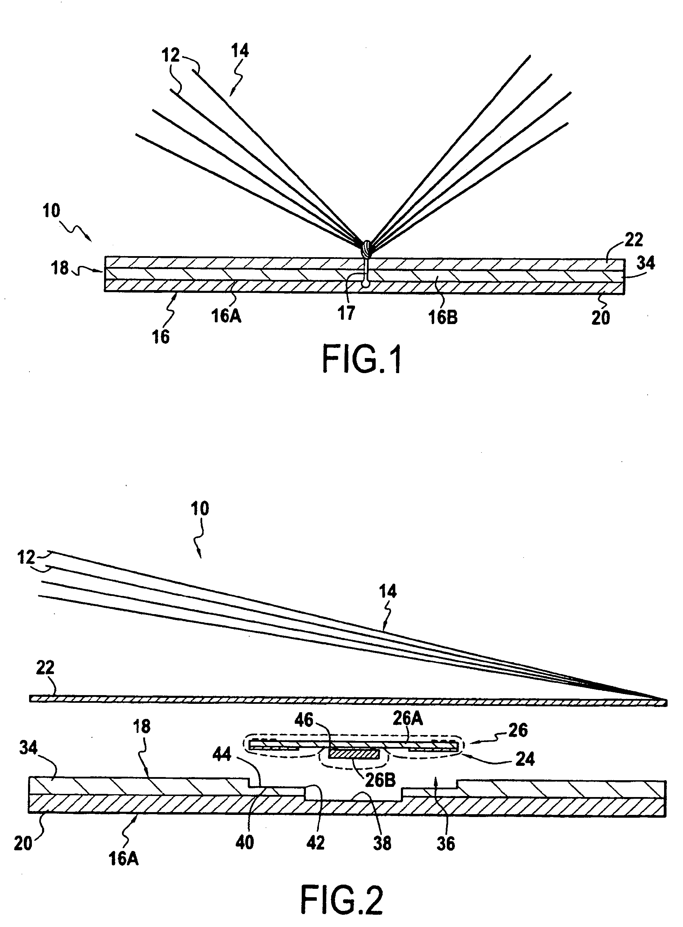

On a représenté sur la figure 1 un document de sécurité selon un premier mode de réalisation de l'invention. Ce document de sécurité est désigné par la référence générale 10.

Dans le premier mode de réalisation de l'invention, illustré par les figures 1 à 5, le document de sécurité est un passeport. Le passeport 10 comprend de façon classique une pluralité de feuilles 12 reliées entre elles pour former un livret 14. Parmi la pluralité de feuilles 12, le livret 14 comprend également au moins un volet de couverture 16 destiné à rigidifier le passeport 10 et à protéger le livret 14 de chocs et agressions diverses.

Les feuilles 12 du livret 14 sont reliées entre elles par exemple le long d'une ligne de reliure 17. Cette ligne de reliure 17 est formée par exemple par couture ou par collage ou par différents procédés d'assemblage adaptés. Cette ligne 17 sépare le volet 16 en deux sous-volets, un volet avant 16A et un volet arrière 16B. Le volet avant 16A porte par exemple de façon classique des indications fixes concernant la nationalité du porteur, etc.

Le volet 16 comprend notamment de préférence une feuille de couverture 20. Par exemple, la feuille de couverture 20 est réalisée dans un papier fort granulé du genre simili cuir ayant une épaisseur sensiblement égale à 300 micromètres.

Conformément à l'invention, le document 10 comprend une structure multicouche 18 formée par au moins deux couches assemblées entre elles pour former un ensemble unitaire.

Dans le premier mode de réalisation, la structure 18 forme le volet avant 16A de couverture du passeport 10 et les deux couches de la structure 18 correspondent respectivement à la feuille de couverture 20 et à une feuille de garde 22 du livret 14.

La feuille de garde 22 forme généralement une feuille 12 du livret 14. Ainsi, le recto de la feuille de garde 22 est agencé en regard du verso de la feuille de couverture 20. La feuille de garde 22 peut en outre comporter par exemple des données variables relatives au porteur du document 10.

Le document de sécurité 10 comprend en outre un dispositif 24 de communication en champ proche incorporé dans l'épaisseur de la structure 18 et, dans l'exemple illustré sur les figures, dans l'épaisseur du volet de couverture avant 16A.

Le dispositif 24 se présente, conformément à l'invention, sous forme d'un module 26 comprenant un support 28 portant une antenne de communication en champ proche 30 et un microcircuit 32.

Le support 28 est réalisé par exemple dans un matériau comprenant essentiellement de l'époxy et ce support 28 a, par exemple, une épaisseur inférieure à 200 micromètres et cette épaisseur est comprise de préférence entre 70 et 100 micromètres.

De préférence, comme cela est illustré sur les figures, le microcircuit 32 est assemblé par report de puce et est dit monté-retourné dans le module 26. Ce procédé d'assemblage est désigné couramment dans la terminologie anglo-saxonne par montage « flip chip ».

Ce procédé d'assemblage se caractérise notamment par une connexion électrique directe de la face active du microcircuit 32 sur le support 28 pour le raccordement électrique avec des conducteurs appropriés sur le support 28 et notamment pour le raccordement électrique avec l'antenne 30.

Dans une variante non illustrée sur les figures, le microcircuit 32 peut être monté sur le support par un procédé de câblage appelé « Wire Bonding » qui consiste à coller le microcircuit sur le support par sa face passive et à câbler le microcircuit à partir de sa face active pour son raccordement électrique. Dans ce cas, le microcircuit et les câbles sont, par exemple, encapsulés dans une calotte de résine polymère.

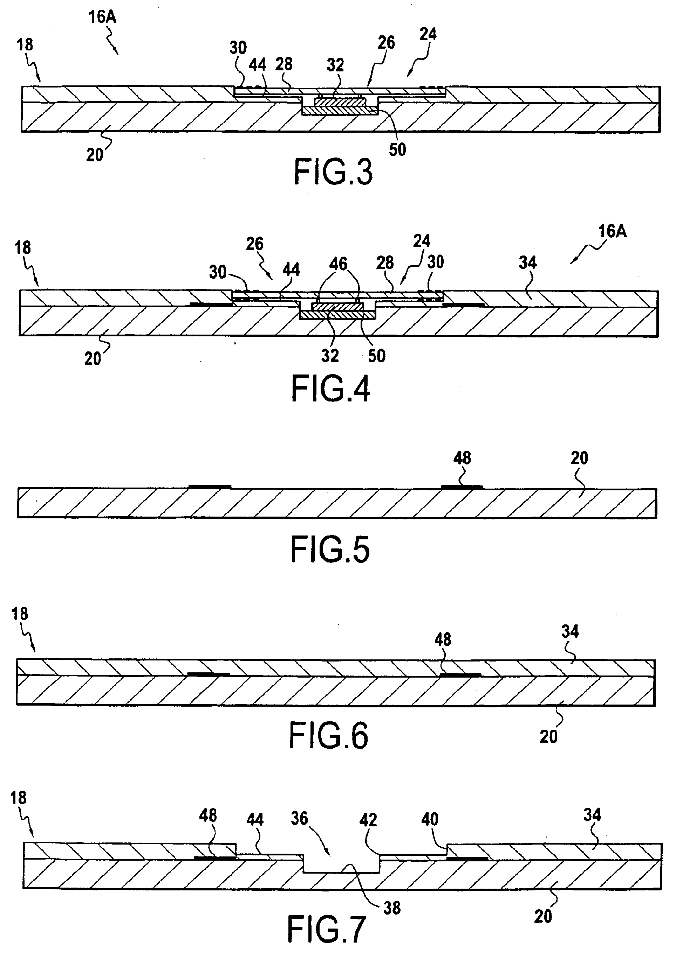

Par ailleurs, l'antenne 30 s'étend par exemple sur une des faces du support 28 du module en périphérie de ce support 28. Dans l'exemple illustré sur les figures, l'antenne 30 s'étend sur une seule face du support 28. Toutefois, dans une variante illustrée notamment sur **la** **figure 4****,** l'antenne 30 peut s'étendre en deux parties sur chacune des faces du support 28 du module 26.

De préférence et dans ce premier mode de réalisation de l'invention, la structure 18 comprend en outre une feuille additionnelle 34 intercalée entre la feuille de couverture 20 et la feuille de garde 22 à l'intérieur de laquelle est agencé au moins partiellement le module 26.

Cette feuille additionnelle 34 a essentiellement pour fonction d'augmenter l'épaisseur de la structure 18 pour faciliter le logement au moins partiel du module 26 dans son épaisseur. Par exemple, la feuille additionnelle 34 a une épaisseur comprise entre 100 et 300 micromètres.

Dans le mode de réalisation illustré sur **la** **figure 1****,** la feuille additionnelle 34 s'étend dans toute la surface du volet 16 de couverture. Toutefois, dans une variante non illustrée, la feuille additionnelle 34 est absente de la partie 16B du volet 16 et ne s'étend que dans l'épaisseur de la partie 16A du volet 16.

De préférence, le module 26 est optiquement dissimulé à l'intérieur de la structure 18 et de préférence la feuille additionnelle 34 a une épaisseur supérieure ou égale à l'épaisseur du support 28.

En outre, du fait que cette feuille additionnelle 34 est intercalée entre la feuille de couverture 20 et la feuille de garde 22, elle est invisible de l'extérieur. Ainsi, à la différence de la feuille de couverture 20 qui est normalisée et qui doit répondre à un certain nombre de critères tels que l'épaisseur, la nature du matériau, etc., le matériau de la feuille additionnelle peut être choisi librement.

De préférence, cette feuille additionnelle 34 est réalisée dans un matériau plus facilement usinable que le matériau formant la feuille de couverture 20. Par exemple, la feuille additionnelle 34 est réalisée dans un matériau comprenant essentiellement des fibres naturelles et/ou synthétiques.

Par exemple, les fibres naturelles sont à base d'un matériau cellulosique. En variante, le matériau de la feuille additionnelle 34 peut comprendre par exemple essentiellement une matière plastique à base d'un polyéthylène chargé ou un polypropylène chargé

De préférence, le module 26 est logé dans une cavité 36 de réception de ce dernier ménagée à l'intérieur de la structure 18. Dans l'exemple décrit, la cavité 36 s'étend sensiblement dans l'épaisseur d'au moins deux couches de la structure 18.

Dans le cas du passeport 10 correspondant au premier mode de réalisation de l'invention, la cavité 36 s'étend dans l'épaisseur de la feuille de couverture 20 et de la feuille additionnelle 34 et débouche en surface de la feuille additionnelle 34 en regard de la feuille de garde 22.

De façon plus précise, comme cela est illustré sur la vue en coupe de **la** **figure 2****,** on voit notamment que la cavité 36 comprend un fond 38 et une paroi périphérique 40 entourant le fond 38.

Cette paroi périphérique 40 comprend notamment un gradin 42 formant un rebord interne périphérique 44 surélevé par rapport au fond 38 d'appui du support 28 du module 26. La cavité 36 comprend ainsi, dans l'exemple décrit, une partie inférieure de petite surface et une partie supérieure de grande surface.

En outre, de préférence, le gradin 42 est localisé à l'intérieur de la feuille additionnelle 34. Ainsi, de cette façon, la partie supérieure de la cavité 36 s'étend essentiellement dans la feuille additionnelle 34.

Par exemple, la cavité 36 est obtenue par usinage, typiquement par fraisage où lamage en deux opérations :
- un grand lamage pour former la partie supérieure correspondant à la profondeur du gradin, cette partie supérieure est essentiellement située dans la feuille additionnelle 34 ; et
- un petit lamage pour former la partie inférieure plus profonde. Ce petit lamage traverse l'épaisseur de la feuille additionnelle 34 jusqu'à la feuille de couverture 20.

Conformément à l'invention, le module 26 comprend une zone 46 de fragilisation du module 26. Par exemple, cette zone de fragilisation 46 est localisée au niveau de la connexion entre le microcircuit 32 et le support 28.

Le module 26 est, par ailleurs, agencé dans l'épaisseur de la structure 18 de manière à ce que, lors d'une séparation entre elles de deux des couches de la structure 18, par exemple la feuille de couverture 20 et la feuille additionnelle 34, la zone de fragilisation 46 est apte à se rompre afin de provoquer la destruction du module 26.

Le module 26 est notamment formé, par exemple, par au moins deux parties 26A, 26B aptes à être séparées lors de la séparation d'au moins deux couches de la structure 18. Bien entendu, de préférence, dans le cas où la structure 18 comprend plus de deux couches, par exemple comme dans l'exemple décrit, trois couches, l'agencement de la zone de fragilisation du module et/ou l'agencement du module dans la structure est choisi de manière à ce que la séparation de deux quelconques des couches provoque la destruction du module 26.

Dans l'exemple décrit, la séparation de la feuille additionnelle 34 et de la feuille de couverture 20 ou bien la séparation de la feuille additionnelle 34 et de la feuille de garde 22 provoque la destruction du module 26.

Par exemple, de préférence, chaque partie 26A, 26B est fixée de façon solidaire à l'une des couches et la séparation de deux des couches entre elles provoque une contrainte importante dans la zone de fragilisation 46 entraînant sa rupture et le module 26 cède de façon préférentielle à cet endroit.

En effet, la liaison entre d'une part la première partie 26A et la première couche 22 et d'autre part la deuxième partie 26B et la deuxième couche 20 est plus forte que la liaison des deux parties 26A, 26B entre elles, matérialisée par la zone de fragilisation 46.

Dans une variante non illustrée sur les figures, la région de fragilisation 46 est formée par une ligne de fracture s'étendant à l'intérieur du support 28 du module 26. Dans ce cas, la séparation des feuilles 20 et 34 provoque la cassure du support 28 du module 26 et donc provoque sa destruction.

On a représenté sur **les** **figures 4 à 7****,** un document de sécurité selon un deuxième mode de réalisation de l'invention. Sur ces figures, les éléments analogues aux éléments **des** **figures 1 à 3** portent des références identiques.

Dans ce deuxième mode, la structure 18 comprend de préférence un anneau électriquement conducteur 48. Cet anneau 48 a pour fonction d'améliorer la portée du module 26 **(****figure 4****).**

En effet, cet anneau électriquement conducteur 48 forme un organe d'amplification du gain de l'antenne 30. Ainsi, l'ajout d'un tel organe électriquement conducteur augmente de façon significative les performances de l'antenne 30 en canalisant les lignes du champ magnétique émis par exemple par un terminal externe à l'intérieur de la surface d'antenne.

Dans ce premier mode de réalisation, l'organe 48 forme un amplificateur du gain de l'antenne améliorant le niveau de courant induit dans cette dernière ainsi que le niveau de rétro-modulation de l'antenne 30 lorsque le dispositif est placé dans le champ électromagnétique du terminal externe.

Conformément à ce deuxième mode de réalisation, l'organe 48 s'étend autour de l'antenne 30 à l'extérieur de la surface de l'antenne 30. Ainsi l'antenne 30 et l'anneau 48 ne s'étendent pas de préférence en vis-à-vis l'un de l'autre pour ne pas masquer le flux du champ magnétique à travers la surface d'antenne, ce qui aurait pour effet finalement de réduire l'amélioration des performances.

Autrement dit, l'organe 48 s'étend de préférence à l'extérieur des contours externes de l'antenne 30 dans un plan parallèle à celui contenant l'antenne 30 ou une partie de l'antenne ou éventuellement dans le même plan.

On va maintenant décrire les principales étapes d'un procédé de fabrication d'un document selon le deuxième mode de réalisation en référence **aux** **figures 4 à 7****.**

Au cours d'une première étape, illustrée par **la** **figure 5****,** on dépose un anneau 48 d'encre électriquement conductrice sur une face d'une feuille de couverture 20, par exemple par sérigraphie.

Au cours d'une deuxième étape illustrée sur **la** **figure 6****,** on empile la feuille additionnelle 34 sur la feuille de couverture 20 et on les fixe entre elles par exemple par collage, par laminage à chaud ou à froid, ou par toute autre manière adaptée pour assembler les deux feuilles entre' elles.

On obtient ainsi une couverture épaissie par la présence de la feuille additionnelle 34.

On forme alors une cavité 36 de réception du module 26 dimensionnée pour recevoir entièrement le module 26.

De préférence, on usine la cavité 36 à l'intérieur de la structure 18 formée par les deux couches, en deux étapes : un grand lamage et un petit lamage **(****figure 7****).** Ainsi, la cavité 26 s'étend essentiellement à l'intérieur de la feuille additionnelle 34 qui est plus facilement usinable que la feuille de couverture 20. En outre, l'augmentation de l'épaisseur de la couverture grâce à la feuille additionnelle 34 permet de faciliter le logement du module 26.

Puis au cours d'une troisième étape, on rapporte le module 26 dans la cavité 36. On rapporte alors le module 26 dans la cavité 36. Ce module 26 est fixé à la structure multicouche 18 notamment au fond 38 de la cavité 36 formée à l'intérieur de la feuille de couverture 20. En outre, le support 28 du module 26 est fixé à la cavité 36 par l'intermédiaire du rebord 42 de la cavité 36 formée à l'intérieur de la feuille additionnelle 34.

Une fois la cavité 36 formée, on dépose une goutte de colle 50 au fond de la cavité 36 et on rapporte le module 26 de manière à ce que ce dernier soit fixé d'une part à la première couche (dans le cas présent, la feuille de couverture 20) par la goutte de colle 50 et d'autre part à la deuxième couche (dans le cas présent, la feuille additionnelle 34) au niveau du rebord 42 de la cavité 36 par exemple également par collage.

Enfin, on assemble les deux feuilles additionnelle 34, 20 à la feuille de garde 22 pour former la structure multicouche 18 ce qui permet notamment de dissimuler optiquement le module 26 dans le passeport 10. En outre, de préférence, cette feuille 22 est également collée au module 26. Ainsi, lorsque la feuille 22 et la feuille 34 sont séparées, de préférence, le module 26 est détruit.

Bien entendu, l'invention n'est pas limitée aux exemples de réalisation qui viennent d'être décrits.

En particulier, l'invention s'applique également aux documents de sécurité ou de valeur dans lesquels la structure multicouche incorporant le module n'est pas assemblée avec un livret, par exemple le document peut être une carte d'identité. Le document peut également être une carte à microcircuit, telle que par exemple une carte bancaire.

## Revendications

1. Document (10) de sécurité, comprenant une structure multicouche (18) formée par au moins deux couches (20, 22, 34) assemblées entre elles face contre face et un dispositif (24) de communication en champ proche incorporé dans l'épaisseur de la structure (18), **caractérisé en ce que** le dispositif (24) se présente sous forme d'un module (26) comprenant un support (28) portant une antenne (30) de communication en champ proche et un microcircuit (32) et **en ce que** le module (26) comprend une zone (46) de fragilisation apte à se rompre lors d'une séparation entre elles d'au moins les deux couches (20, 22, 34) pour provoquer la destruction du module (26).

2. Document (10) selon la revendication précédente, dans lequel la zone de fragilisation (46) s'étend entre des première (26A) et deuxième (26B) parties du module (26), et dans lequel la première partie (26A) du module (26) comprend l'antenne (30) et la deuxième partie (26B) comprend le microcircuit (32).

3. Document (10) selon l'une quelconque des revendications précédentes, dans lequel, le document (10) comprenant une pluralité de feuilles (12) reliées entre elles pour former un livret (14), au moins les deux couches de la structure (18) correspondent à une feuille de couverture (20) et à une feuille de garde (22) du livret (14).

4. Document (10) selon la revendication précédente, dans lequel la structure (18) comprend en outre une feuille additionnelle (34) intercalée entre la feuille de couverture (20) et la feuille de garde (22), à l'intérieur de laquelle est agencé au moins partiellement le module (26).

5. Document (10) selon l'une quelconque des revendications précédentes, dans lequel le module (26) est logé dans une cavité (36) ménagée dans l'épaisseur d'au moins deux couches (20, 22, 34) de la structure (18).

6. Document (10) selon la revendication précédente, dans lequel la cavité (36) comprend une région centrale profonde de réception du microcircuit (32) et une région périphérique surélevée entourant la région centrale d'appui du support du module et délimitant entre elles un gradin, la région périphérique s'étend entièrement dans l'une des deux couches.

7. Document (10) selon la revendication 4 prise ensemble avec la revendication 5 ou 6, dans lequel la cavité (36) s'étend dans l'épaisseur d'au moins la feuille de couverture (20) et la feuille additionnelle (34).

8. Document (10) selon la revendication précédente, dans lequel le microcircuit (32) est fixé au fond de la cavité (36) et le support de module est solidaire de la feuille additionnelle (34) et/ou de la feuille de garde (22), pour provoquer une désolidarisation du support et du microcircuit.

9. Document (10) selon l'une quelconque des revendications 4 à 8, dans lequel la feuille additionnelle (34) a une épaisseur supérieure ou égale à l'épaisseur du support (28).

10. Document (10) selon l'une quelconque des revendications 4 à 9, dans lequel la feuille additionnelle (34) est réalisée dans un matériau plus facilement usinable que le matériau formant la feuille de couverture (20).

11. Document (10) selon l'une quelconque des revendications 4 à 10, dans lequel la feuille additionnelle (34) est réalisée dans un matériau comprenant des fibres synthétiques et/ou naturelles.

12. Document (10) selon l'une quelconque des revendications précédentes, dans lequel le support (28) est réalisé par dans un matériau comprenant essentiellement de l'epoxy et a une épaisseur inférieure à 200 micromètres.

13. Document (10) selon l'une quelconque des revendications précédentes, dans lequel l'antenne (30) s'étend sur une seule face du support (28) ou s'étend en deux parties sur chacune des faces du support (28).

14. Document (10) selon l'une quelconque des revendications précédentes, dans lequel le module (26) est fixé à une première des au moins deux couches (20) par une goutte de colle (50) et à une deuxième des au moins deux couches (34) au niveau d'un rebord (42) d'une cavité (36).

15. Document (10) selon la revendication précédente, dans lequel le module (26) est également collé à une troisième des au moins deux couches (22).

## Patentansprüche

1. Sicherheitsdokument (10), umfassend eine mehrschichtige Struktur (18), die von mindestens zwei Schichten (20, 22, 34) gebildet ist, die miteinander Fläche an Fläche verbunden sind, und eine Nahfeldkommunikationsvorrichtung (24), die in der Dicke der Struktur (18) integriert ist, **dadurch gekennzeichnet, dass** die Vorrichtung (24) in Form eines Moduls (26) vorhanden ist, umfassend eine Stütze (28) die eine Nahfeldkommunikationsantenne (30) trägt, und eine Mikroschaltung (32), und dass das Modul (26) eine Bruchzone (46) umfasst, die geeignet ist, bei einer Trennung mindestens der beiden Schichten (20, 22, 34) voneinander zu brechen, um die Zerstörung des Moduls (26) hervorzurufen.

2. Dokument (10) nach dem vorhergehenden Anspruch, bei dem sich die Bruchzone (46) zwischen ersten (26A) und zweiten (26B) Teilen des Moduls (26) erstreckt, und bei dem der erste Teil (26A) des Moduls (26) die Antenne (30) und der zweite Teil (26B) die Mikroschaltung (32) umfasst.

3. Dokument (10) nach einem der vorhergehenden Ansprüche, bei dem das Dokument (10) eine Vielzahl von Blättern (12) umfasst, die miteinander verbunden sind, um ein Heft (14) zu bilden, wobei mindestens die beiden Schichten der Struktur (18) einem Deckblatt (20) und einem Vorsatzblatt (22) des Heftes (14) entsprechen.

4. Dokument (10) nach dem vorhergehenden Anspruch, bei dem die Struktur (18) ferner ein zusätzliches Blatt (34) umfasst, das zwischen dem Deckblatt (20) und dem Vorsatzblatt (22) angeordnet ist, und in dem mindestens teilweise das Modul (26) angeordnet ist.

5. Dokument (10) nach einem der vorhergehenden Ansprüche, bei dem das Modul (26) in einem Hohlraum (36) angeordnet ist, der in der Dicke von mindestens zwei Schichten (20, 22, 34) der Struktur (18) ausgenommen ist.

6. Dokument (10) nach dem vorhergehenden Anspruch, bei dem der Hohlraum (36) einen tiefen zentralen Bereich für die Aufnahme der Mikroschaltung (32) und einen überhöhten Umfangsbereich umfasst, der den zentralen Auflagebereich der Stütze des Moduls umgibt, und die zwischen sich eine Ausnehmung begrenzen, wobei sich der Umfangsbereich zur Gänze in einer der Schichten erstreckt.

7. Dokument (10) nach Anspruch 4 gemeinsam mit Anspruch 5 oder 6, bei dem sich der Hohlraum (36) in der Dicke mindestens des Deckblattes (20) und zusätzlichen Blattes (34) erstreckt.

8. Dokument (10) nach dem vorhergehenden Anspruch, bei dem die Mikroschaltung (32) am Boden des Hohlraums (36) befestigt ist und die Stütze des Moduls mit dem zusätzlichen Blatt (34) und/oder dem Vorsatzblatt (22) verbunden ist, um eine Trennung der Stütze und der Mikroschaltung hervorzurufen.

9. Dokument (10) nach einem der Ansprüche 4 bis 8, bei dem das zusätzliche Blatt (34) eine Dicke größer oder gleich der Dicke der Stütze (28) hat.

10. Dokument (10) nach einem der Ansprüche 4 bis 9, bei dem das zusätzliche Blatte (34) aus einem Material hergestellt ist, das einfacher zu bearbeiten ist als das Material, das das Deckblatt (20) bildet.

11. Dokument (10) nach einem der Ansprüche 4 bis 10, bei dem das zusätzliche Blatt (34) aus einem Material hergestellt ist, das synthetische und/oder natürliche Fasern umfasst.

12. Dokument (10) nach einem der vorhergehenden Ansprüche, bei dem die Stütze (28) aus einem Material hergestellt ist, das im Wesentlichen Epoxy umfasst und eine Dicke unter 200 Mikrometer hat.

13. Dokument (10) nach einem der vorhergehenden Ansprüche, bei dem sich die Antenne (30) auf nur einer Seite der Stütze (28) erstreckt oder in zwei Teilen auf jeder der Seiten der Stütze (28) erstreckt.

14. Dokument (10) nach einem der vorhergehenden Ansprüche, bei dem das Modul (26) an einer ersten der mindestens zwei Schichten (20) durch einen Klebstofftropfen (50) und an einer zweiten der mindestens zwei Schichten (34) im Beriech eines Randes (42) eines Hohlraums (36) befestigt ist.

15. Dokument (10) nach dem vorhergehenden Anspruch, bei dem das Modul (26) auch an eine dritte der mindestens zwei Schichten (22) geklebt ist.

## Claims

1. A security document (10), comprising a multilayer structure (18) formed by at least two layers (20, 22, 34) assembled together face to face and a near-field communication device (24) incorporated in the thickness of the structure (18), **characterised in that** the device (24) is in the form of a module (26) comprising a support (28) bearing a near-field communication antenna (30) and a microcircuit (32) and **in that** the module (26) comprises an embrittlement zone (46) capable of breaking during separation of at least the two layers (20, 22, 34) to cause destruction of the module (26).

2. Document (10) according to the preceding claim, in which the embrittlement zone (46) extends between first (26A) and second (26B) parts of the module (26), and in which the first part (26A) of the module (26) comprises the antenna (30) and the second part (26B) comprises the microcircuit (32).

3. Document (10) according to any one of the preceding claims, in which, the document (10) comprising a plurality of sheets (12) joined together to form a booklet (14), at least the two layers of the structure (18) correspond to a cover sheet (20) and to an endpaper (22) of the booklet (14).

4. Document (10) according to the preceding claim, in which the structure (18) further comprises an additional sheet (34) interleaved between the cover sheet (20) and the endpaper (22), inside which the module (26) is arranged at least partially.

5. Document (10) according to any of the preceding claims, in which the module (26) is housed in a cavity (36) made in the thickness of at least two layers (20, 22, 34) of the structure (18).

6. Document (10) according to the preceding claim, in which the cavity comprises a deep central reception region of the microcircuit (32) and a peripheral region elevated surrounding the central support region of the support of the module and delimiting a step, the peripheral region extends entirely in one of the two layers.

7. Document (10) according to Claim 4 together with Claim 5 or 6, in which the cavity (36) extends in the thickness of at least the cover sheet (20) and the additional sheet (34).

8. Document (10) according to the preceding claim, in which the microcircuit (32) is fixed to the base of the cavity (36) and the module support is solid with the additional sheet (34) and/or of the endpaper (22), to cause detachment of the support and of the microcircuit.

9. Document (10) according to any one of claims 4 to 8, in which the additional sheet (34) has a thickness greater than or equal to the thickness of the support (28).

10. Document (10) according to any one of claims 4 to 9, in which the additional sheet (34) is made of material more easily machinable than the material forming the cover sheet (20).

11. Document (10) according to any one of claims 4 to 10, in which the additional sheet (34) is made of material comprising synthetic and/or natural fibres.

12. Document (10) according to any one of the preceding claims, in which the support (28) is made from material comprising essentially epoxy and has a thickness of less than 200 micrometers.

13. Document (10) according to any one of the preceding claims, in which the antenna (30) extends over a single face of the support (28) or extends in two parts on each of the faces of the support (28).

14. Document (10) according to any one of the preceding claims, in which the module (26) is fixed to a first of the at least two layers (20) by a drop of adhesive (50) and to a second of the at least two layers (34) at the level of a rim (42) of a cavity (36).

15. Document (10) according to the preceding claim, in which the module (26) is also adhered to a third of the at least two layers (22).
